# FASCICULE DE BREVET EUROPEEN

(11) **EP 1 057 088 B1**
(45) Date de publication et mention de la délivrance du brevet: **20.08.2003**
(21) Numéro de dépôt: 99904902.6
(22) Date de dépôt: 16.02.1999
(51) Int. Cl.: G05D 23/19, H02M 5/257, H02M 5/293

(54) **PROCEDE DE GRADATION DE LA DISSIPATION D'UN SIGNAL ELECTRIQUE**
VERFAHREN ZUR GRADATION DER WÄRMEABLEITUNG EINES ELEKTRISCHEN SIGNALS
METHOD FOR CONTROLLING THE DISSIPATION OF AN ELECTRIC SIGNAL

(30) Priorité: 20.02.1998 FR 9802086
(43) Date de publication de la demande: 06.12.2000
(73) Titulaire: Crouzet Automatismes, 26000 Valence (FR)
(72) Inventeur: RAFFESTIN, Luc, Thomson-CSF, F-94117 Arcueil Cedex (FR)
(74) Mandataire: Guérin, Michel
(86) Numéro de dépôt international: FR9900342
(87) Numéro de publication internationale: WO99042913

(56) Documents cités:
- DE-A- 4 108 406
- DE-A- 4 214 882
- DE-U- 9 013 999
- FR-A- 2 641 435
- GB-A- 2 237 942
- US-A- 3 605 026
- US-A- 4 282 422
- US-A- 4 334 147

## Description

La présente invention a pour objet un procédé de gradation de la dissipation d'un signal électrique. Elle est plus particulièrement utilisable dans le domaine du chauffage électrique, qu'il s'agisse de chauffage domestique ou industriel. Le procédé est néanmoins également utilisable pour commander n'importe quel type d'actionneur. On peut, par exemple, s'en servir pour commander un moteur. Le but de l'invention est de s'affranchir des problèmes de clignotements qui résultent, en cas de dissipation réduite, de l'alternance dissipation arrêt de dissipation.

On connaît les dispositifs de variation de dissipation par commande de phase. Ces dispositifs sont principalement utilisés pour réaliser des variateurs de lumière. Ils servent également pour la commande des moteurs. Leur principe est de déclencher, au cours de chaque alternance d'un signal électrique alternatif de puissance, la dissipation avec un retard de phase déterminé par rapport au passage par zéro de la tension du signal électrique. L'inconvénient présenté par ce type de régulation est de provoquer des commutations au moment où la tension du signal électrique est élevée. Ceci a pour conséquence de réinjecter des harmoniques parasites sur le réseau électrique. Un autre type de dispositif qui résout ces problèmes a été imaginé. Le procédé qui y est mis en oeuvre est un procédé d'alimentation par trains d'ondes syncopées. En pratique, le signal électrique est dissipé pendant des alternances entières, puis bloqué pendant des alternances suivantes. Le rapport entre le nombre des alternances où la dissipation se produit et celles où elle est empêchée conduit à la gradation de la consommation.

Ainsi pour une consommation à moitié de la consommation nominale on conçoit aisément qu'une double alternance sur deux soit l'objet de dissipation. Le problème devient plus aigu lorsque le ratio est différent de la moitié. Pour simplifier l'explication on connaît des dispositifs qui, travaillant par exemple sur une centaine de périodes du signal électrique alternatif, prévoient d'assurer la dissipation pendant certaines alternances successives dont le nombre correspond en pourcentage au rapport de gradation recherché. Les autres alternances du signal ne conduisent pas à la dissipation. Le problème présenté par ce type de commandes n'est pas perceptible lorsque le temps de montée, ou l'inertie, du phénomène, notamment thermique, est supérieur à une ou deux secondes. Cependant ce problème se fait sentir si l'inertie du phénomène est inférieure à la seconde. Ceci est par exemple le cas d'un fer à souder dont le temps de montée est inférieur à 0, 5 seconde. Avec un tel dispositif de gradation, ce fer à souder serait alternativement chaud puis froid, mais ne pourrait jamais être tiède comme désiré. L'autre problème qui survient est celui d'une commutation lumineuse perceptible à l'oeil. Ceci est par exemple le cas des plaques chauffantes en vitrocéramiques utilisées dans les cuisines. Plus généralement, dans d'autres domaines que le domaine thermique, dès que le temps de montée est court, le caractère gênant du clignotement réapparaît.

Dans le but d'utiliser néanmoins cette technique qui présente l'avantage de démarrer la dissipation aux zéros de tension et de la faire cesser aux zéros du courant (donc sans réinjection de parasites sur le réseau), il est connu d'utiliser des microprocesseurs capables d'organiser la dissipation sur plusieurs alternances réparties le plus régulièrement possible sur une séquence de périodes. Ces réalisations présentent cependant l'inconvénient que les microprocesseurs utilisés sont puissants (donc chers) et que de plus ils s'adaptent mal à la diversité des standards électriques : 60 Hertz en Amérique, 50 Hertz en Europe.

L'invention a pour objet de remédier à ces problèmes en proposant un procédé simple qui peut être mis en oeuvre par un microprocesseur de petite taille, peu onéreux, ou même par un circuit câblé. Un autre avantage présenté par le procédé de l'invention est de tenir compte très simplement de la fréquence de l'alimentation électrique. Le principe de l'invention consiste, d'une part, à comparer la représentation binaire d'une grandeur de consigne de gradation à respecter avec le rang, exprimé sous forme binaire, d'une période ou d'une alternance du signal électrique alternatif dans une séquence de périodes ou d'alternances. Ce rang est attribué à une période ou une alternance en fonction de la place de cette période ou alternance dans l'historique d'une suite de périodes ou alternances, prédéterminées en nombre. Plus exactement, on met en correspondance la consigne binaire avec l'inverse binaire de rang de la période ou de l'alternance du signal électrique. Ces périodes ou alternances groupées en séquence peuvent comporter, selon l'invention, une période ou une alternance pendant laquelle la dissipation n'est pas effectuée. Pendant cette alternance de non-dissipation, on mesure la fréquence du signal électrique. Ensuite on impose, d'une manière temporellement balistique, que la durée cumulée des alternances suivantes de la séquence soit un multiple entier de la durée de cette alternance mesurée. À l'issue de la séquence des alternances, on mesure à nouveau la durée de la période. La conséquence du procédé de l'invention est de provoquer une consommation systématiquement inférieure à la consommation nominale possible. L'écart est cependant minime. Il correspond, dans un exemple préféré à 0, 25%.

L'invention a donc pour objet un procédé de gradation de la dissipation d'un signal électrique alternatif dans une charge dans lequel
- on commande la dissipation à des moments choisis du signal électrique,
caractérisé en ce que
- on numérise en mode binaire avec une dynamique de N bits une consigne de gradation et on obtient une consigne binaire,
- on compte, ou on décompte, en mode binaire avec un compteur cyclique à N bits des alternances du signal électrique et on obtient un compte binaire représentatif du rang de l'alternance,
- on met en correspondance un premier bit de poids faible significatif du compte binaire avec un bit correspondant dans l'inverse de la consigne binaire, et
- on déclenche la dissipation quand le bit inverse de la consigne binaire est significatif.

Elle a également pour objet un procédé de gradation de la dissipation d'un signal électrique alternatif dans une charge, caractérisé en ce que
- on empêche la dissipation pendant une alternance d'une séquence d'alternances de ce signal alternatif,
- on mesure la durée d'alternance pendant cette alternance où la dissipation est empêchée, et
- on commande la dissipation, pendant une durée égale à 2^{N}-1 fois la durée mesurée, sur les autres alternances de cette séquence.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : la représentation schématique d'un dispositif utilisable pour mettre en oeuvre le procédé de l'invention ;
- figure 2 : la représentation schématique de la comparaison de la consigne binaire avec l'inverse du rang binaire de l'alternance dans la séquence ;
- figure 3 : une représentation schématique des effets comparés des procédés de gradation connus ;
- figures 4a à 4b : des tableaux représentant la consigne binaire et le rang binaire, et montrant comment s'organise selon l'invention la répartition régulière des alternances de dissipation ;
- figure 5 : un algorithme mis en oeuvre par le circuit de la figure 1 pour appliquer le procédé de l'invention ;
- figure 6 : des diagrammes temporels de signaux se produisant dans le circuit de la figure 1 lors de l'application de l'algorithme.

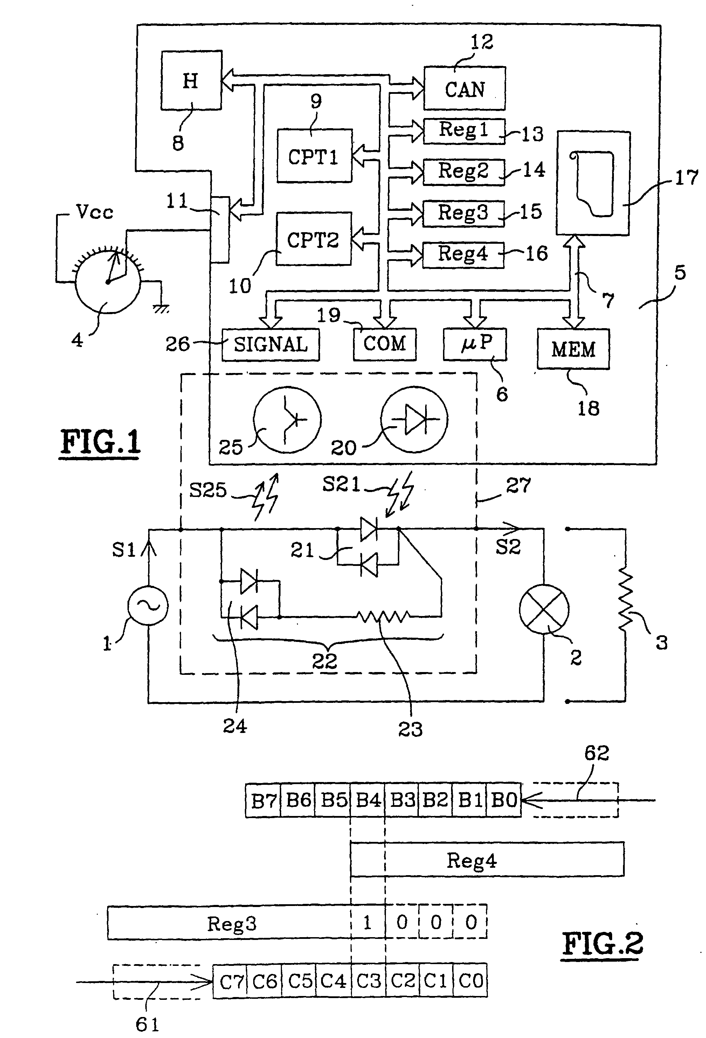

La figure 1 montre un dispositif utilisable pour mettre en oeuvre le procédé de l'invention. Un signal électrique alternatif S1 est délivré par une source 1. Il est destiné à être dissipé dans une charge 2. Dans le cas du chauffage, la charge 2 est une résistance 3. La gradation de la dissipation du signal électrique est provoquée par une consigne de gradation produite par un gradateur 4. Par exemple le gradateur 4 est un potentiomètre alimenté entre Vcc et la masse et dont le curseur délivre un signal de consigne. Le curseur de ce potentiomètre est connecté en entrée d'un microcontrôleur 5 utilisable pour mettre en oeuvre le procédé de l'invention. Le microcontrôleur 5 comporte essentiellement un microprocesseur 6 servant d'unité arithmétique et logique. Le microprocesseur 6 est en relation par l'intermédiaire d'un bus 7 de commandes de données, et d'adresses, avec respectivement une horloge 8, un premier compteur CPT1 9, un deuxième compteur CPT2 10, une interface d'entrée-sortie 11, un convertisseur analogique numérique 12, un jeu d'au moins quatre registres 13 à 16, une mémoire programme 17 non volatile, et au besoin une mémoire. de travail 18.

Pour commander la dissipation, dans une mise en oeuvre préférée de l'invention, on a choisi d'utiliser un optocoupleur à titre de relais de commande. On verra par la suite quel avantage supplémentaire cette utilisation procure. Le bus 7 est ainsi en relation avec un registre 19 de commandes qui pilote un jeu de diodes électroluminescentes 20 dont la lumière émise est canalisée sur un jeu 21 de triacs (montés tête-bêche) à déclenchement optique par leur gâchette. Lorsque le jeu 21 des triacs est conducteur, la source 1 de signal électrique alternatif dissipe son énergie dans la charge 2. Lorsque le jeu 21 est en circuit ouvert, un circuit de mesure 22, monté en parallèle sur le jeu 21 des triacs, conduit un courant très faible dans la charge 2. La dissipation y est quasiment nulle.

Un avantage lié au montage du circuit de mesure en parallèle sur le jeu 21 des triacs est que le relais de commande n'a besoin que de deux points de connexion reliés à la source 1. Pour effectuer la mesure, il n'est nécessaire de prévoir un point supplémentaire de connexion raccordé au point de la source 1 non relié au jeu 21 des triacs.

Il est bien entendu que le jeu 21 de triac n'est donné qu'à titre d'exemple et que la dissipation peut être commandée avec tout tpe d'interrupteur électronique tel que par exemple un thyristor ou un transistor de puissance.

La faiblesse de ce courant est imposée par la grande valeur d'une résistance 23 mise en série avec un jeu de diodes électroluminescentes 24 du circuit 22. Sous l'effet de ce courant, les diodes 24 émettent une lumière. Celle-ci est conduite par un couplage optique sur un phototransistor 25. Le courant électrique passant dans le phototransistor est détecté, amplifié, et sa valeur binaire est stockée dans un registre 26 du microcontrôleur 5. Le phototransistor 25 est en relation avec un circuit d'amplification car les diodes 24 émettent faiblement quand elles sont alimentées sous une tension S1 inférieure ou égale à 48 volts. Cette faible émission est imposée par la forte résistance 23, d'environ 200 kΩ. La valeur forte de la résistance 23 est dictée par le soucis de ne pas trop y consommer de puissance lorsque la tension S1 est de l'ordre de 660 volts

Différentes solutions sont envisageables pour l'optocoupleur 20-21 24-25 de commande et de mesure. Il peut notamment être réalisé sous la forme d'un circuit indépendant 27 connecté d'une part aux microcontrôleur 5 et d'autre part en série entre la source 1 et la charge 2.

Dans l'invention, dans le deuxième compteur CPT2 10 qui est un compteur à N bits (dans un cas préféré N vaut huit), on compte les périodes, ou les alternances, qui se sont produites depuis une alternance ou période initiale. Le compteur CPT2 10 est un compteur cyclique qui recommence à compter lorsqu'il a atteint son compte nominal de 2^{N}. En variante, on peut faire décompter le compteur CPT2 10. Le compteur CPT2 10 peut être un compteur matériel, de préférence il est un compteur logiciel. Il y a une correspondance entre la séquence des périodes ou alternances du signal électrique alternatif et le maximum auquel peut aboutir le compteur CPT2 10. En comptant une unité à chaque période, ou chaque alternance, on attribue par le compte du compteur un rang à chacun période ou alternance dans la séquence. Le compte binaire du rang de la période est mémorisé dans un troisième registre Reg3 15.

Le signal analogique de consigne disponible sur l'interface 11 est converti par le convertisseur 12 en une consigne binaire mémorisée, elle, dans un quatrième registre Reg4 16.

Sur la figure 2, on montre que la consigne binaire possède également N bits (N=8 dans le cas préféré), numérotés B7 à B0, et est présente dans le registre Reg4. De même, le compte binaire dont les bits sont nommés C7 à C0 a été enregistré dans le registre Reg3. Les poids des bits du compteur sont notés de C7 à C0 selon qu'ils passent de fort à faible. Il en est de même des bits B7 à B0.

Dans l'invention, comme montré sommairement sur la figure 2, le compte binaire est comparé à l'inverse de la consigne binaire. On y met en correspondance essentiellement le bit significatif (à 1) de poids le plus faible, du compte binaire avec le bit correspondant de l'inverse de la consigne binaire.

A l'origine, on effectue la correspondance entre le bit C0 et le bit B7. Cette correspondance n'est établie que si le bit C0 est significatif (à 1). On reviendra plus loin sur les effets de cette correspondance.

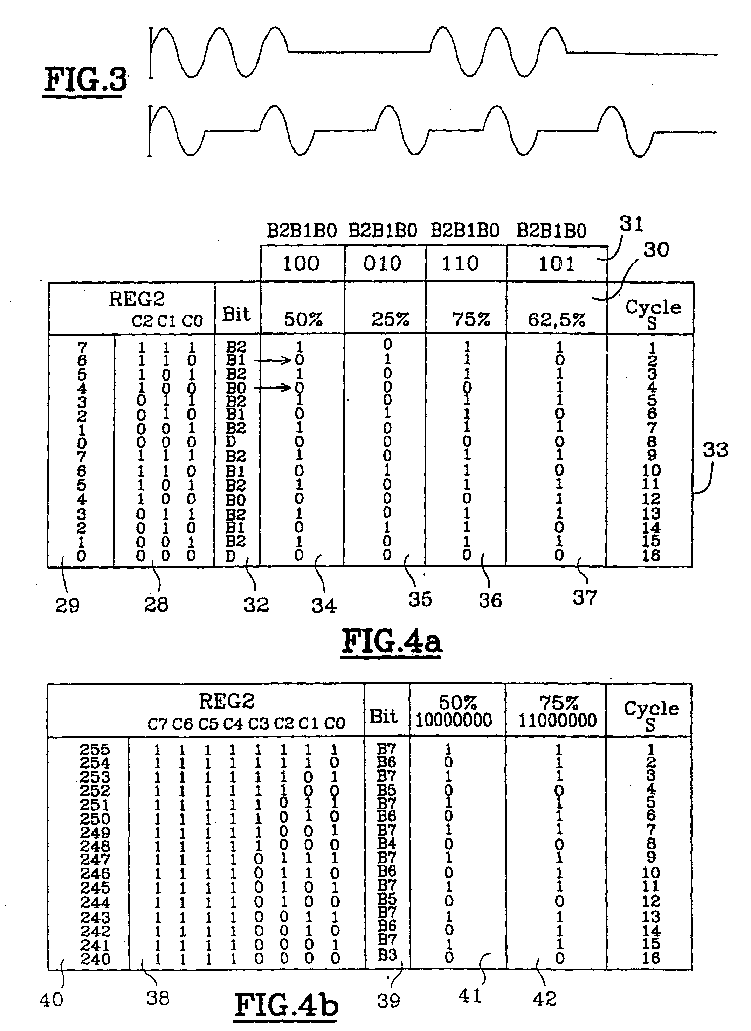

La figure 3 montre deux diagrammes temporels de répartition, pour moitié, de périodes de dissipation et de non-dissipation. Dans la partie supérieure plusieurs périodes du signal alternatif sont suivies de plusieurs périodes de ce signal pendant lesquelles il n'y a pas de dissipation. Dans la partie inférieure, des périodes de dissipation suivent des périodes de non-dissipation. On constate que les effets de clignotements sont moins perceptibles, dans le cas de la partie inférieure que dans le cas de la partie supérieure du fait de la fréquence élevée (à l'échelle de la perception) du signal d'alimentation électrique.

Les figures 4a et 4b montrent sur des tableaux les correspondances à établir entre le compte binaire et la consigne binaire. La figure 4a montre une variante simple où N=3, la figure 4b montre la variante où N=8. Sur la figure 4a, on a représenté le compte du compteur CPT2 10 dans une colonne 28. Ce compte évolue dans la séquence d'une période, ou d'une alternance, à l'autre. Dans une colonne adjacente 29, on a indiqué la valeur décimale du compte du compteur 10. Comme ce compteur est cyclique, et que dans la variante utilisée c'est un compteur décompteur, ses états passent de 7 à 0 puis de 7 à 0 et ainsi de suite. En binaire ces états passent de 111 à 000 puis de 111 à 000 et ainsi de suite.

Dans les rangées 30 et 31 du tableau de la figure 4a, on a fait figurer respectivement la valeur de la consigne et son expression binaire. Cette expression binaire est donnée sous un même nombre de bits que le compte binaire. Les pourcentages représentent un ratio vis à vis de la valeur nominale du gradateur. Dans une colonne 32 on a fait figurer le rang du bit de la consigne binaire qui est concerné par le bit significatif de poids le plus faible du compte binaire. Ainsi dans la première ligne 33 le compte binaire est 111, le bit significatif qui vaut 1, de poids le plus faible, est le bit C0. Le bit significatif de poids le plus faible du compte binaire renseigne sur le rang du bit de la consigne binaire à prendre en compte. Ici il s'agit du bit de poids inverse du poids du bit C0: c'est le bit de poids le plus fort : le bit B2. A la ligne suivante, le premier bit significatif C1 implique de retenir comme bit de la consigne le bit B1.

En quatrième ligne, le compte binaire est 100. Le bit significatif de poids le plus faible est le bit C2 qui impose de retenir le bit B0. En fonction de l'indication présente dans la colonne 32 on affiche donc, dans des colonnes 34 à 37, les valeurs de commande correspondant aux consignes binaires. Ainsi dans la colonne 34 chaque fois que le bit B2 est désigné, la valeur 1 est portée. En effet la valeur de B2 vaut 1. Par contre chaque fois que B1 ou B0 sont désignés la valeur zéro est portée dans la colonne. Les colonnes 34 à 37 indiquent alors les répartitions des périodes du signal alternatif pendant lesquelles la dissipation est provoquée pour d'autres gradations de dissipation. On constate que la répartition des alternances de dissipation et de non dissipation est idéalement effectuée.

La figure 4b reprend les mêmes éléments. Cependant, dans cette figure, au lieu de décrire un compteur CPT2 à 3 bits, le compteur décrit possède 8 bits. En conséquence, la consigne sera elle-même élaborée sur 8 bits, les bits B0 à B7. Les indications correspondant aux colonnes 28 et 32 s'appliquent aux colonnes 38 et 39 de la figure 4b. Dans une colonne de gauche 40, on a fait figurer la valeur décimale du rang du compte binaire. Ce rang évolue de 0 à 255 ou, en décomptant, de 255 à 0.

L'exemple représenté en colonne 41 montre, pour une gradation de 50%, que le seul bit de consigne actif correspondant aux bits du compteur 10 est le bit B7. Les autres bits B6 B5 ... B0 sont nuls. Dans la colonne 42, pour une gradation à 75%, on obtient, comme pour la colonne 36, une succession de 3 bits à 1 suivie d'un bit à 0.

Comme on l'a expliqué précédemment, dans l'invention, on neutralise une période, une double alternance, ou éventuellement une seule alternance, pendant laquelle on effectue la mesure de la durée de la période. Cette durée de neutralité constitue une erreur propre au procédé de l'invention. Dans le cas où le compteur 10 aurait 3 bits, l'erreur est égale à 1/8 c'est à dire à environ 12,5%. De ce fait, même à dissipation maximale, la charge ne sera alimentée que 87,5% du temps. Cette erreur, non négligeable, doit être cependant rapprochée de l'erreur de quantification elle-même. L'erreur de quantification est égale à la moitié de la valeur du bit de poids le plus faible: soit 7,1% dans tous les cas. Hormis le cas de la valeur nominale, l'erreur de gradation imputable systématiquement au procédé de l'invention n'est que de 5%. A la gradation nominale, on peut par ailleurs obtenir les résultats de dissipation escomptés en réduisant la valeur de la charge. Avec la variante préférée (avec un compteur à 8 bits) de la figure 4b l'erreur est réduite à 1/255. Cette erreur est alors négligeable.

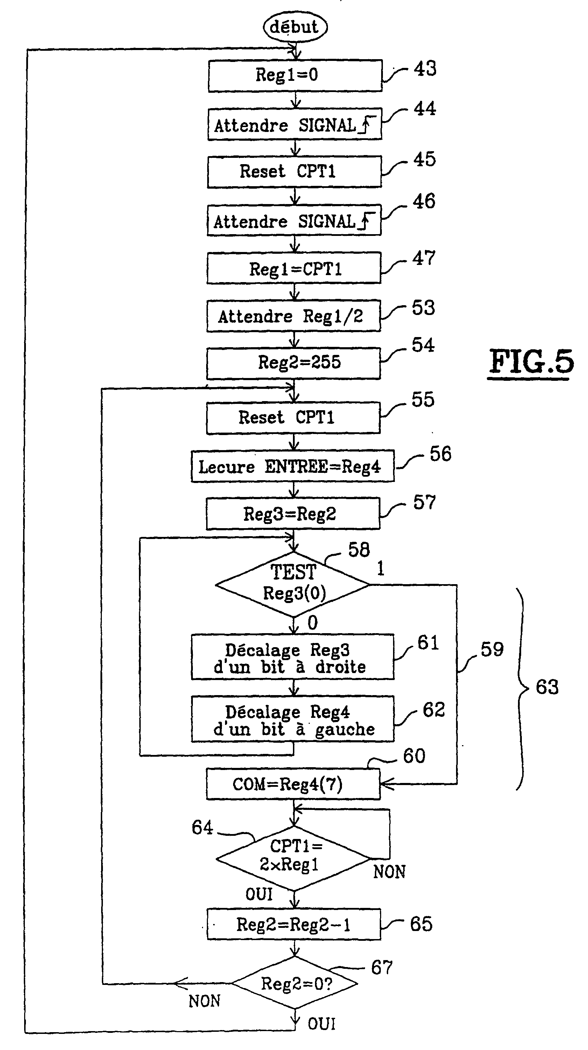

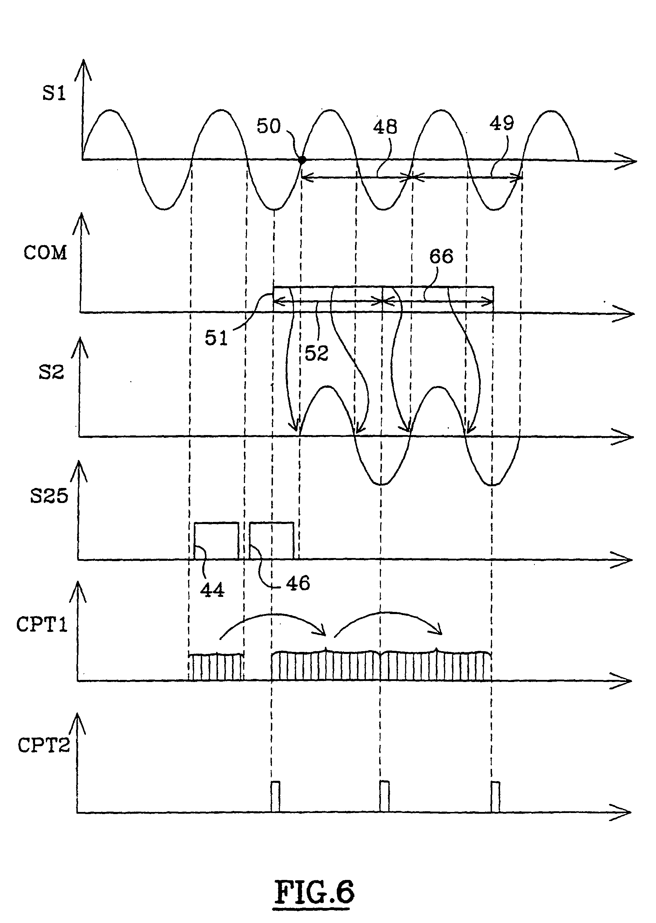

La figure 5 montre les étapes préférées du procédé de l'invention. L'explication du fonctionnement du procédé de l'invention est compréhensible en consultant également la figure 6. Celle-ci représente des diagrammes temporels correspondant respectivement au signal S1 délivré par la source 1, au signal COM de commande disponible dans le registre 19, et au signal S2 de dissipation résultant, en fonction de la valeur de la consigne, des tableaux des figures 4a ou 4b. La figure 6 montre en dessous du signal S2, le signal S25 reçu par le phototransistor 25 et les signaux de comptage CPT1 et CPT2 présents dans les compteurs 9 et 10. Le compteur 10 compte les périodes du signal S1. Le programme de la figure 5 comporte une description du compteur 10 sous une forme logiciel

Le programme correspondant à l'organigramme de la figure 5 est mémorisé dans la mémoire 17 du micro contrôleur 5. Ce programme' commence par une étape 43 au cours de laquelle le registre Reg1 13 est mis à zéro. Le registre Reg1 13 sert à mémoriser une valeur représentative de la durée de la période de S1. On attend ensuite, au cours d'une l'étape 44, le front de montée du signal S25. Le signal S25 présente, conventionnellement, un front de montée suivi d'un front de descente lorsque les triacs 21 se désamorcent, sont en circuits ouverts, et que le courant passe à travers la résistance 23. Au moment où le front de montée de S25 apparaît, on remet à zéro à l'étape 45, le compteur 9. Le comptage dans le compteur 9 est alors entrepris et se continue jusqu'à ce que l'on reçoive à une étape 46, un autre front de montée du signal S25. Le compteur CPT1 9 compte des impulsions d'horloge. Celle-ci dans un exemple, produit des signaux avec une fréquence de l'ordre de 15 Khz. La durée de la période de l'horloge 8 est de 64 microsecondes environ. Du fait de la présence des passages par zéro de S1 à chaque alternance, le compteur 9 compte, entre deux fronts de montée de S25, les coups d'horloge qui se produisent durant une demi-période du signal de la source 1. Il compte pendant 10 millisecondes (pour 50 Hz), ou un peu plus de 8 millisecondes (pour 60 Hz). La valeur stockée dans le registre Reg1 13 est donc d'environ 156 pour 50 Hz. Elle est moindre pour 60 Hz. Ceci justifie l'emploi d'un compteur à 8 bits pour le compteur 9.

Ce faisant, on arrête le comptage et on stocke à une étape 47 dans le registre Reg1 13 la valeur du compteur 9 à cet instant. La valeur stockée dans le registre Reg1 13 est la valeur d'une demi-période la valeur d'une alternance. La détection des deux fronts de montée, désignés symboliquement par les références 44 et 46 se fait par l'allumage de l'une ou l'autre des deux diodes du jeu 24.

On utilise de préférence dans l'invention des optocoupleurs "zero crossing" de type connu qui ne déclenchent la conduction des triacs 21 qu'au moment du passage par zéro de la tension de S1. De cette façon la synchronisation est obtenue automatiquement. Pour les déclencher, il suffit de produire un signal lumineux S21 avant le passage par zéro de la tension, par exemple un quart de période avant comme décrit ci-dessous. Il peut donc être justifié de valider, par anticipation, la dissipation électrique pendant les périodes 48 et 49.

Le signal S21, COM, peut ainsi être préalable au passage par 0, à la date 50, du signal S1 d'alimentation électrique. En effet, les triacs 21 ne devront se déclencher qu'à ce moment. L'avantage d'agir de cette façon est d'anticiper, à partir d'une date 51 qui se produit aux trois quarts de la période précédente, le décompté d'une durée 52 correspondant à la durée utile 48. Dans une étape suivante 53, on décide donc d'attendre une durée égale à un quart de période. Ceci est obtenu en attendant un nombre de coups d'horloge égal à la moitié du contenu de Reg1 13. Après l'attente 53, correspondant à l'arrivée de l'instant 51, au cours d'une étape 54, on porte le registre Reg2 14 à la valeur 255 (ou autre si N est différent de 8). De cette façon, on initialise l'algorithme du procédé de l'invention pour 255 cycles. Le registre Reg2 14 est le registre courant du compte des périodes, le registre Reg3 15 est un registre de travail.

Au cours d'une étape suivante 55, on remet à zéro le compteur de durée CPT1 9. En même temps, on en déclenche le comptage. Ceci est visible sur la figure 6 à la ligne CPT1 à partir de la date 51. Dans l'invention, à une étape 56 effectuée très fréquemment, on mesure la valeur de la consigne disponible sur l'interface d'entrée sortie 11. De préférence l'étape 56 est effectuée à chaque période du signal S1. Cette mesure est transformée par le convertisseur 12 et le résultat est stocké dans le registre Reg4 16. En définitive, sera stocké dans ce registre Reg4 16, un dessin binaire correspondant au rapport des périodes de dissipation par rapport à la durée totale des 256 périodes.

A une étape 57 suivante, on porte le contenu du registre Reg2 (qui au début vaut 255) dans le registre auxiliaire de travail Reg3 15. On va se servir du registre auxiliaire Reg3 15 pour rechercher les bits significatifs, de poids le plus faible, du rang de la période étudiée. Cette recherche est effectuée par un test 58 au cours duquel on regarde si le contenu du bit de rang 0 de Reg3 vaut 1. Au départ, cf. figure 2, le bit de rang 0 du registre Reg3 est égal au bit C0. Si c'est le cas, par un branchement 59, on impose au cours d'une étape 60 que le registre 19 de commandes reçoive comme signal COM la valeur du bit de poids fort du registre Reg4 (qui mémorise la valeur de consigne). Au départ, le bit de poids fort correspondant est le bit B7 (dans la variante où N égal 8). Si le bit du registre Reg3 testé ne vaut pas 1, dans ce cas, avec des étapes respectivement 61 et 62, on décale vers la droite le registre Reg3 et vers la gauche le registre Reg4. Ces étapes sont représentées sur la figure 2.

Ce faisant, on porte dans le bit de poids faible du registre Reg3, la valeur précédente C1, en même temps qu'on porte dans le bit de poids fort du registre Reg4, la valeur B6. La figure 2 montre une triple récurrence des étapes 61 et 62 au cours de laquelle on a pu mesurer que le premier bit à 1 du registre auxiliaire Reg3 qui valait 1 était le bit C3. Dans ces conditions, à l'étape 60, la valeur B4 disponible dans le bit de poids fort du registre Reg4, sera imposée comme signal de commande COM. Ce signal de commande vaut 1 ou 0 selon la valeur à laquelle correspond le bit B4 dans les dessins des figures 4a 4b. Selon le cas, il faut ou il ne faut pas allumer les triacs 21.

Compte tenu que ces registres Reg3 et Reg4 ont huit bits, au maximum les étapes 61 et 62 peuvent devoir être exécutées 8 fois. Avec le test 58 et l'étape 60, il y a ainsi un ensemble 63 de 32 opérations élémentaires à effectuer. Dans un exemple, la fréquence fondamentale de l'horloge 8 est une fréquence à 1 MHz donnant un temps de cycle élémentaire du microprocesseur de 1 micro seconde. En conséquence, l'ensemble 63 des étapes 58 à 62 dure 32 microsecondes. Ceci est bien inférieur au quart de la période qui vaut entre 4 et 5 millisecondes. L'anticipation du quart de période (couplée avec l'utilisation d'un optocoupleur zero crossing) met bien à l'abri du problème de vitesse de calcul du microprocesseur 6. Ce faisant, le signal de commande COM doit être imposé avec sa valeur (0 ou 1) pendant la durée 52. Ceci est obtenu en faisant compter le compteur 9 jusqu'à un compte égal à deux fois le contenu du registre 1. Tant que ce compte n'est pas atteint, c'est que l'on se situe encore pendant la période 52. Ceci est réalisé par une étape 64 d'attente.

Lorsque cette période 52 se termine, à une étape 65 on provoque le décomptage du compteur constitué par le registre Reg2. Celui-ci va comporter la valeur 254 (et ainsi de suite jusqu'à zéro). On pourrait également, comme représenté sur la figure 6, compter les impulsions qui correspondent au réarmement du compteur 1 par l'intermédiaire d'un compteur matériel 10. Comme on était parti de 255, à l'issue de l'étape 65, le contenu du registre Reg2 n'est pas nul. En conséquence, après un test 67, on va aborder une deuxième période 66 de commande consécutive à la période 52. Pour cette période 66, on effectue le même cycle des opérations 55 à 65. En résumé, ces opérations 55 à 65 se produisent 255 fois. Selon le cas, un signal COM de commande sera porté à 1 ou 0 en fonction de l'état du bit concerné du registre Reg4.

A la 256^{ème} étape le test 67 révèle que le contenu du registre Reg2 est nul. Il comporte huit zéros. Dans ce cas, on réitère les étapes 43 à 54 au cours desquelles on mesure à nouveau la durée de la demi-période du signal S1 de la source 1 pour la stocker dans le registre 1. A une fréquence de 50 Hz ceci revient à mesurer cette période environ toutes les 5 secondes. Dans la version préférée de l'invention, à cette 256^{ème} étape, les triacs 21 ne sont pas allumés, ce qui conduit à une mesure fiable de la durée de la période.

On a expliqué tout le fonctionnement en évoquant les périodes successives du signal électrique. Dans ce cas le signal de commande COM est maintenu pendant la période d'anticipation 52 ou 68 correspondantes. Il serait cependant envisageable de commander par alternance en distinguant les alternances positives des alternances négatives. De même, l'invention reste applicable si le signal électrique de puissance est un signal pulsé, entre zéro et un, et dans lequel il n'y aurait que des alternances positives.

Il est apparu que le fait de mesurer la fréquence du signal S1 était une solution vraiment efficace pour éviter les conséquences de la dérive de la fréquence de d'alimentation et des dérives de fonctionnement du microcontrôleur 5. En effet, du fait que, dans l'invention, on commande, au besoin séparément, les alternances ou périodes il est nécessaire de disposer d'une synchronisation exacte. Comme lors de la conduction des triacs la tension disponible aux bornes de ces triacs est trop faible pour être détectée par le circuit de détection, on a résolu ce problème en neutralisant une période et en faisant la mesure de la durée de cette période toutes les 2 N périodes. Par la suite on considère que pendant les 255 périodes suivantes cette période n'évolue pas. En quelque sorte on effectue une détermination balistique de la fin de la 255^{ème} période.

Le convertisseur analogique numérique 12, quant à lui, échantillonne et numérise la consigne sur 8 bits en un temps bien plus court que celui au bout duquel la valeur est nécessaire pour être stockée dans le registre Reg4, c'est à dire avant la date 51.

## Revendications

1. Procédé de gradation de la dissipation d'un signal électrique alternatif dans une charge dans lequel
- on commande (20) la dissipation à des moments choisis du signal électrique,
**caractérisé en ce que**
- on numérise (12) en mode binaire avec une dynamique de N bits une consigne (4) de gradation et on obtient une consigne binaire,
- on compte (CPT2), ou on décompte, en mode binaire avec un compteur cyclique à N bits des alternances du signal électrique et on obtient un compte binaire représentatif d'un rang de l'alternance,
- on met en correspondance (Reg3, Reg4) un bit de poids faible significatif du compte binaire avec un bit correspondant dans l'inverse de la consigne binaire, et
- on déclenche la dissipation quand le bit de la consigne est significatif (1).

2. Procédé selon la revendication 1, **caractérisé en ce qu'**on numérise (56) la consigne à chaque double alternance du signal électrique.

3. Procédé selon l'une des revendications 1 à 2, **caractérisé en ce que** pendant une alternance sur 2^{N} alternances (43-54) on ne dissipe pas le signal électrique dans la charge.

4. Procédé selon l'une des revendications 1 à 3, **caractérisé en ce que**
- on empêche (43-54) la dissipation pendant une alternance d'une séquence d'alternances de ce signal alternatif,
- on mesure (46) la durée d'alternance pendant cette alternance où la dissipation est empêchée, et
- on commande (55-67) la dissipation, pendant une durée égale à 2^{N}-1 fois la durée mesurée, sur des autres alternances de cette séquence.

5. Procédé selon l'une des revendications 3 ou 4, **caractérisé en ce que**
- on mesure le passage à zéro de ce signal électrique pendant une alternance où on ne dissipe pas, et
- on synchronise (51,50) la dissipation du signal électrique sur un passage à zéro de ce signal électrique.

6. Procédé selon l'une des revendications 1 à 5, **caractérisé en ce qu'**on prend en compte des doubles alternances au lieu d'alternances simples.

7. Procédé selon l'une des revendications 1 à 6, **caractérisé en ce qu'**on choisit une charge d'impédance plus faible pour dissiper une même puissance de signal électrique qu'avec une charge nominale.

8. Procédé selon l'une des revendications 1 à 7, **caractérisé en ce qu'**on alimente un moteur électrique selon ce procédé.

9. Procédé selon l'une des revendications 1 à 8 dans lequel le nombre N vaut 8.

10. Procédé selon l'une des revendications 1 à 9, **caractérisé en ce que**
- on commande la dissipation par des triacs (21) reliés à un optocoupleur (27).

11. Procédé selon l'une des revendications 1 à 10, **caractérisé en ce qu'**on valide (48,52) la dissipation pendant une alternance par un signal présent par anticipation pendant une alternance précédente.

12. Procédé selon l'une des revendications 1 à 11
**caractérisé en ce que**
la dissipation est commandée au moyen d'un interrupteur électronique (21) et **en ce que** la mesure (46) de la durée d'alternance est réalisée aux bornes de l'interrupteur électronique (21).

## Patentansprüche

1. Verfahren zum Einstellen des Ausmaßes der Dissipation eines Wechselstromsignals in einer Last, bei dem
- die Dissipation zu ausgewählten Zeitpunkten des elektrischen Signals gesteuert (20) wird,
**dadurch gekennzeichnet, daß**
- ein Ausmaßeinstellungs-Sollwert (4) in einen binären Modus mit einer Dynamik von N Bits digitalisiert (12) wird und ein binärer Sollwert erhalten wird,
- im binären Modus mit einem zyklischen Zähler mit N Bits die Halbperioden des elektrischen Signals aufwärts (CPT2) oder abwärts gezählt werden und ein binärer Zählstand, der einen Rang der Halbperiode repräsentiert, erhalten wird,
- ein Bit des binären Zählstands mit niedrigem Gewicht mit einem Bit, das dem Kehrwert des binären Sollwerts entspricht, in Entsprechung gesetzt wird (Reg3, Reg4) und
- die Dissipation ausgelöst wird, wenn das Bit des Sollwerts signifikant ist (1).

2. Verfahren nach Anspruch 1, **dadurch gekennzeichnet, daß** der Sollwert bei jeder Vollperiode des elektrischen Signals digitalisiert wird (56).

3. Verfahren nach einem der Ansprüche 1 bis 2, **dadurch gekennzeichnet, daß** das elektrische Signal während einer von 2^{N} Halbperioden (43-54) in der Last nicht in Wärme umgesetzt wird.

4. Verfahren nach einem der Ansprüche 1 bis 3, **dadurch gekennzeichnet, daß**
- die Dissipation während einer Halbperiode einer Folge von Halbperioden dieses Wechselstromsignals verhindert wird (43-54),
- die Halbperiodendauer während dieser Halbperiode, in der die Dissipation verhindert wird, gemessen wird (46) und
- die Dissipation während einer Dauer, die gleich der (2^{N} - 1)fachen gemessenen Dauer ist, in den anderen Halbperioden dieser Folge befohlen wird (55-67).

5. Verfahren nach einem der Ansprüche 3 oder 4, **dadurch gekennzeichnet, daß**
- der Nulldurchgang dieses elektrischen Signals während einer Halbperiode, in der keine Dissipation erfolgt, gemessen wird und
- die Dissipation des elektrischen Signals mit einem Nulldurchgang dieses elektrischen Signals synchronisiert wird (51, 50).

6. Verfahren nach einem der Ansprüche 1 bis 5, **dadurch gekennzeichnet, daß** anstelle von Halbperioden Vollperioden berücksichtigt werden.

7. Verfahren nach einem der Ansprüche 1 bis 6, **dadurch gekennzeichnet, daß** eine Last mit einer geringeren Impedanz gewählt wird, um eine Dissipation derselben Leistung des elektrischen Signals wie mit einer Nennlast zu verwirklichen.

8. Verfahren nach einem der Ansprüche 1 bis 7, **dadurch gekennzeichnet, daß** mit diesem Verfahren ein Elektromotor gespeist wird.

9. Verfahren nach einem der Ansprüche 1 bis 8, bei dem die Anzahl N gleich 8 ist.

10. Verfahren nach einem der Ansprüche 1 bis 9, **dadurch gekennzeichnet, daß**
- die Dissipation durch Triacs (21), die mit einem Optokoppler (27) verbunden sind, befohlen wird.

11. Verfahren nach einem der Ansprüche 1 bis 10, **dadurch gekennzeichnet, daß** die Dissipation während einer Halbperiode durch ein Signal, das durch Antizipation während einer vorhergehenden Halbperiode gegeben ist, validiert wird (48, 52).

12. Verfahren nach einem der Ansprüche 1 bis 11, **dadurch gekennzeichnet, daß** die Dissipation mittels eines elektronischen Ein/Aus-Schalters (21) befohlen wird und daß die Messung (46) der Habperiodendauer an den Anschlüssen des elektronischen Ein/Aus-Schalters (21) ausgeführt wird.

## Claims

1. Method of graduating the dissipation of an alternating electrical signal into a load in which
- the dissipation is turned on (20) at chosen moments of the electrical signal,
**characterized in that**
- a gradation set point (4) is digitized (12) in binary mode with a dynamic range of N bits, and a binary set point is obtained,
- excursions of the electrical signal are counted (CPT2), or counted down, in binary mode with a cyclic N-bit counter, and a binary count representative of the position of the excursion is obtained,
- a low-order significant bit of the binary count is placed in correspondence (Reg3, Reg4) with a corresponding bit in the inverse of the binary set point, and
- dissipation is triggered when the bit of the set point is significant (1).

2. Method according to Claim 1, **characterized in that** the set point is digitized (56) at each double excursion of the electrical signal.

3. Method according to one of Claims 1 and 2, **characterized in that**, during one excursion out of 2^{N} excursions (43-54) the electrical signal is not dissipated into the load.

4. Method according to one of Claims 1 to 3, **characterized in that**
- dissipation is prevented (43-54) during one excursion of a sequence of excursions of this alternating signal,
- the excursion duration is measured (46) during this excursion in which the dissipation is prevented, and
- dissipation is turned on (55-67) for a period equal to 2^{N}-1 times the measured duration, on other excursions of this sequence.

5. Method according to either of Claims 3 and 4, **characterized in that**
- the zero-crossing of this electrical signal is measured during an excursion where there is no dissipation, and
- the dissipation of the electrical signal is synchronized (51, 50) to a zero-crossing of this electrical signal.

6. Method according to one of Claims 1 to 5, **characterized in that** the double excursions are taken into account instead of single excursions.

7. Method according to one of Claims 1 to 6, **characterized in that** a load of lower impedance is chosen in order to dissipate the same electrical-signal power as with a nominal load.

8. Method according to one of Claims 1 to 7, **characterized in that** an electric motor is powered according to this method.

9. Method according to one of Claims 1 to 8 in which the number N is equal to 8.

10. Method according to one of Claims 1 to 9, **characterized in that**
- the dissipation is turned on by triacs (21) linked to an optocoupler (27).

11. Method according to one of Claims 1 to 10, **characterized in that** the dissipation is ratified (48, 52) during one excursion via a signal present by anticipation during a preceding excursion.

12. Method according to one of Claims 1 to 11, **characterized in that** the dissipation is turned on by means of an electronic switch (21) and **in that** the measurement (46) of the excursion duration is carried out at the terminals of the electronic switch (21).
